# EUROPÄISCHE PATENTSCHRIFT

(11) **EP 1 940 005 B1**
(45) Veröffentlichungstag und Bekanntmachung des Hinweises auf die Patenterteilung: **30.10.2013**
(21) Anmeldenummer: 07124169.9
(22) Anmeldetag: 28.12.2007
(51) Int. Cl.: H02K 1/24

(54) **Rotor für eine elektrische Klauenpolmaschine**
Rotor for an electric claw pole machine
Rotor pour une machine électrique à pôles à griffes

(30) Priorität: 28.12.2006 DE 102006062490; 28.12.2007 DE 102007063328
(43) Veröffentlichungstag der Anmeldung: 02.07.2008
(73) Patentinhaber: Robert Bosch GmbH, 70442 Stuttgart (DE)
(72) Erfinder: Gamm, Oliver, 73054 Eislingen (DE); Braun, Horst, 70469 Stuttgart (DE)

(56) Entgegenhaltungen:
- DE-A1- 19 958 503
- US-A- 4 617 485
- US-A1- 2005 116 581

## Beschreibung

### Stand der Technik

Die Erfindung geht aus von einem Rotor für eine elektrische Klauenpolmaschine nach dem Oberbegriff des Anspruchs 1. Hierzu ist in der DE 199 58 503 A1 bereits eine elektrische Maschine mit einem Klauenpolrotor vorgeschlagen worden, welcher ein Erregersystem aus elektromagnetisch erregbaren Polen und Gegenpolen aufweist. Bei einer derartigen Maschine wird das aerodynamische Geräusch von dem Läufergeräusch dominiert, welches durch Wechselwirkungen des rotierenden Läufers mit dem Ständer und/oder mit Streben der Maschine am Lufteintritt erzeugt wird. Um dieses Geräusch zu dämpfen wird in der genannten Druckschrift vorgeschlagen zwischen den sich am Umfang des Rotors abwechselnden Polen und Gegenpolen einen Pollückenverschluss aus unmagnetischem Material einzusetzen, welcher die Freiräume in den Pollücken zumindest teilweise ausfüllt. Die Arretierung des Pollückenverschlusses erfolgt unter Überständen an den Polwurzeln der Klauenpole. Eine derartige Anordnung reduziert das Läufergeräusch jedoch nur unvollkommen, da der Rotor im Bereich der Polwurzel noch immer zerklüftet ist und die dort vorhandenen Luftvolumina bei Rotation des Läufers durch Unebenheiten am Ständer, insbesondere im Bereich der Wickelköpfe, zum Schwingen angeregt werden und ein Läufergeräusch von beachtlicher Lautstärke verursachen.

Die US-A-4 617 485 offenbart auch einen derartigen Rotor.

### Offenbarung der Erfindung

Erfindungsgemäß wird die gestellte Aufgabe durch einen Rotor mit den Merkmalen des Anspruchs 1 gelöst. Als zweckmäßig hat es sich erwiesen, daß als Dämpfungsmittel verwendete Verschlussteile mit den äußeren Oberflächen der Polfinger und der Polwurzeln im Wesentlichen glatt und bündig abschließen. Hinsichtlich der Gestaltung der Verschlussteile ist es zweckmäßig, wenn diese jeweils einen scheibenförmigen Grundkörper im Bereich der Polschuhe des Rotors aufweisen, welcher mit Fortsätzen in die Freiräume an den Polfingern und an den Polwurzeln hineinreicht und die Oberfläche des Läufers vollständig glättet, sodass an der Läuferoberfläche keine Luftvolumina mehr verbleiben, die zum Schwingen und somit zur Geräuscherzeugung angeregt werden können.

Die Verschlussteile sind zweckmäßigerweise als Druckgussteile hergestellt und bestehen vorzugsweise aus einem diamagnetischen oder paramagnetischen Material mit hoher Wärmeleitfähigkeit, insbesondere aus Aluminium oder einer Aluminiumlegierung. Derartige Materialien besitzen auch eine relativ hohe mechanische Festigkeit, sodass die Verschlussteile als selbsttragende Bauteile gestaltet werden können.

Als zweckmäßig hat es sich weiterhin erwiesen, wenn die äußere Oberfläche der scheibenförmigen Grundkörper der beiden Verschlussteile als Kühlkörper gestaltet ist, vorzugsweise in der Form, dass an der Oberfläche des Grundkörpers Teilbereiche in Form von Lüfterschaufeln nach außen vorspringen. Hierdurch kann der fehlende oder zumindest eingeschränkte Kühlluftdurchsatz durch den Rotor ersetzt und eine sehr wirksame Wärmeableitung an die Umgebungsluft erreicht werden. Die Wärmeableitung wird weiterhin noch dadurch erhöht, dass die Verschlussteile so gestaltet sind, dass sie nahezu spaltfrei an den Polschuhen und/oder an den Polwurzeln und/oder an den Polfingern und/oder an der Wicklung des Rotors anliegen, wobei zusätzlich eine Imprägnierung mit wärmeleitfähigem Harz aufgebracht und hierbei verbliebene Spalte und/oder Öffnungen geschlossen werden, sodass einerseits die Wärmeableitung an die Umgebung erhöht und andererseits durch den Verschluss der Restspalte noch verbliebene Geräuschquellen eliminiert werden.

Weitere Einzelheiten und vorteilhafte Ausgestaltungen der Erfindung ergeben sich aus den Unteransprüchen und der Beschreibung der Ausführungsbeispiele.

### Kurze Beschreibung der Zeichnungen

Es zeigen:
- Figur 1: eine perspektivische Darstellung eines ersten Ausführungsbeispiels eines geräuschdämpfend verschlossenen Rotors einer Klauenpolmaschine,
- Figur 2: eine Teilansicht der Rotoroberfläche in Richtung des Pfeils II in Figur 1,
- Figur 3: eine perspektivische Darstellung eines der beiden in Figur 1 verwendeten Verschlussteile,
- Figur 4: einen Teilschnitt durch den Rotor nach der Linie IV-IV in Figur 2,
- Figur 5: eine perspektivische Darstellung einer zweiten Ausführungsform des erfindungsgemäßen Rotorverschlusses,
- Figur 6: eine Ansicht der Rotoroberfläche in Richtung des Pfeils VI in Figur 5 und
- Figur 7: eine perspektivische Darstellung eines der beiden in Figur 5 verwendeten Verschlussteile für die Rotoroberfläche.

### Ausführungsformen der Erfindung

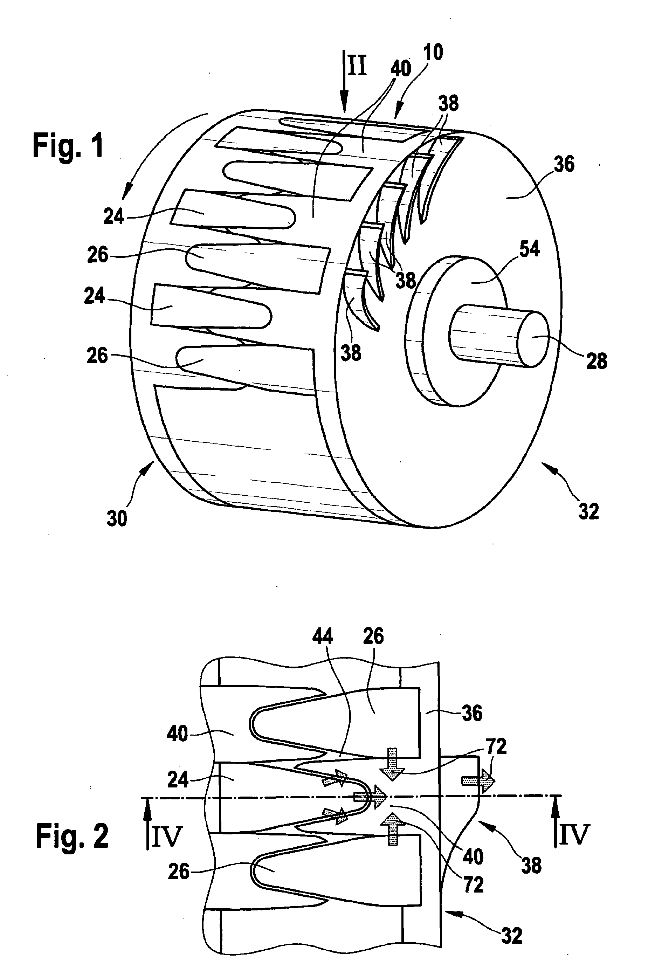

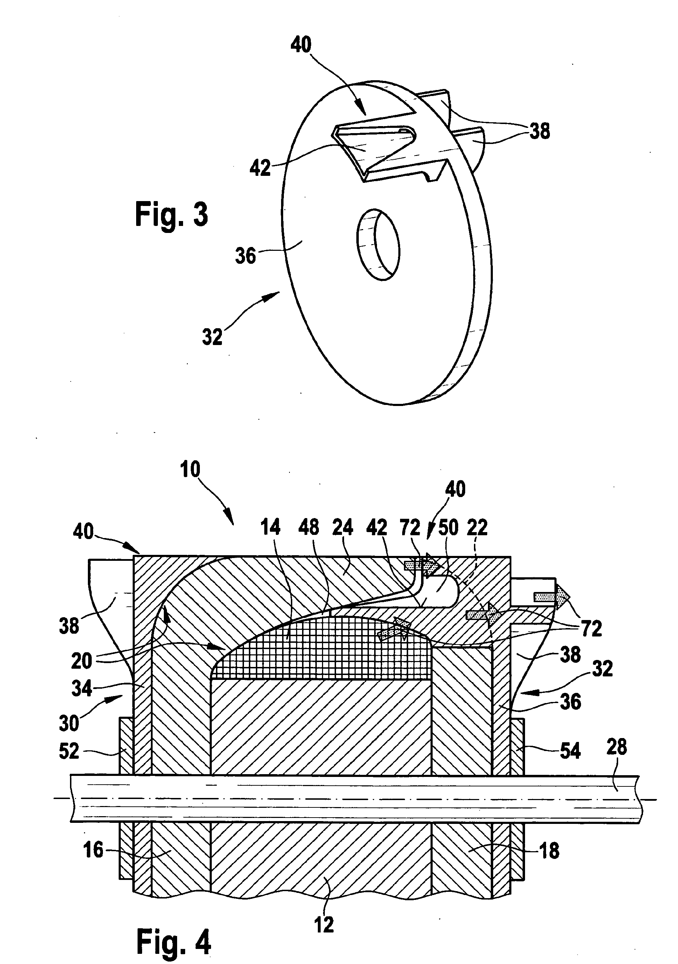

Die Figuren 1 und 4 zeigen den Rotor 10 einer elektrischen Klauenpolmaschine, wie sie als Generator in Kraftfahrzeugen Verwendung findet. Der Rotor ist grundsätzlich in bekannter Weise aufgebaut mit einem Magnetkern 12, einer mit Gleichstrom gespeisten Erregerwicklung 14 und mit Polschuhen 16 und 18 (auch als Polplatinen bekannt), welche über Polwurzeln 20, 22 beim Ausführungsbeispiel in zwölf achsparallel verlaufende Polfinger 24, 26 übergehen. Die Polfinger 24, 26 überlappen sich am Umfang des Rotors 10 und bilden so abwechseln Nord- und Südpole. Der Magnetkern 12 mit den Polschuhen 16, 18 und den Klauenpolen 24, 26 ist auf eine Rotorwelle 28 aufgepresst. Der Rotor 10 arbeitet mit einer in der Zeichnung nicht dargestellten, im Ausführungsbeispiel dreiphasigen Ständerwicklung zusammen.

Gegenstand der vorliegenden Erfindung ist die Dämpfung des Läufergeräusches, welches durch Wechselwirkungen des Rotors 10 mit dem Ständer der Maschine verursacht wird. Verantwortlich für dieses Geräusch sind die Luftvolumina in den Zwischenräumen zwischen den Polfingern 24, 26 und zwischen den Polwurzeln 20, 22, welche bei drehendem Rotor aufgrund der Druckunterschiede an den jeweils auflaufenden und ablaufenden Kanten zum Schwingen angeregt werden. Um dieses Geräusch zu unterdrücken werden als geräuschdämmende Mittel zwei Verschlussteile 30 und 32 an beiden Stirnflächen des Rotors 10 angebracht, welche einen nahezu vollständigen Verschluss der Freiräume zwischen den Polfingern und an den Polwurzeln des Rotors bilden und mit den äußeren Oberflächen der Polwurzeln 20, 22 und der Polfinger 24, 26 im Wesentlichen bündig abschließen. Die Verschlussteile 30, 32 sind spiegelsymmetrisch aufgebaut mit jeweils einem scheibenförmigen Grundkörper 34, 36 im Bereich der Polschuhe 16, 18 des Rotors 10 und weisen Fortsätze 38, 40 auf, welche in die Freiräume zwischen den Polwurzeln 20, 22 und den Polfingern 24, 26 hineinreichen und diese verschließen.

Die Verschlussteile 30, 32 bestehen aus diamagnetischem oder paramagnetischem Material mit hoher Wärmeleitfähigkeit und sind als selbsttragende Druckgussteile aus Aluminium oder einer Aluminiumlegierung gefertigt, beispielsweise aus GD-AlSi9Cu3 oder GD-AlSi9Cul2. Zur Verbesserung der Wärmeabfuhr an die Umgebungsluft sind die Verschlussteile 30, 32 im Bereich der Grundkörper 34, 36 als Kühlkörper gestaltet durch angeformte, im Wesentlichen radial verlaufende Lüfterschaufeln 38, welche eine sehr wirksame Ableitung der Verlustwärme des Rotors 10 an die Umgebungsluft gewährleisten. Die abzuführende Verlustwärme resultiert aus Wirbelstromverlusten, insbesondere in den Polfingern 24, 26, und aus Kupferverlusten in der Erregerwicklung 14.

Die Ausbildung der Verschlussteile 30 und 32 mit den Lüfterschaufeln 38 und den Fortsätzen 40 ist aus den Figuren 2 und 3 deutlicher ersichtlich, wobei aus Gründen einer übersichtlichen Darstellung, ebenso wie in den restlichen Figuren, jeweils nur einige der Lüfterschaufeln 38 und der Fortsätze 40 zum Verschluss der Freiräume zwischen den Polfingern 24, 26 und den Polwurzeln 20, 22 dargestellt sind. Bei der Ausführung entsprechend den Figuren 1 bis 4 sind die Fortsätze 40 an den Verschlussteilen 30, 32 symmetrisch zu den Polfingern 24, 26 ausgebildet und erstrecken sich am Umfang des Rotors 10 in axialer Richtung jeweils bis etwa zur Mitte der Rotormantelfäche. Zusätzlich besitzen die Fortsätze 40 Stützflächen 42 für die Spitzen der von der Gegenseite vorspringenden Polfinger 24, 26, wodurch Schwingungen der Klauenpole weitgehend unterdrückt werden.

Durch die erfindungsgemäße Formgebung der Verschlussteile 30, 32 ist gewährleistet, dass sie im Wesentlichen spaltfrei an den Polschuhen 16 und 18, an den Polwurzeln 20 und 22 sowie an den Polfingern 24 und 26 anliegen. Außerdem ist die Unterseite der Fortsätze 40 so geformt, dass sie auch nahezu spaltfrei an der Wicklung 14 des Rotors 10 anliegen, sodass ein guter Wärmeübergang und eine gute Wärmeableitung von den Verschlussteilen 30, 32 in allen Bereichen sichergestellt ist. Zusätzlich sind die Verschlussteile 30, 32 mit wärmeleitendem Harz imprägniert, sodass bei der Montage verbliebene Spalte 44, 46 und/oder Öffnungen 48, beispielsweise an der Oberfläche der Wicklung 14, durch das wärmeleitende Harz versiegelt und mit gutem Wärmeübergang zu den Verschlussteilen geschlossen sind.

Eine spezielle Ausgestaltung der Verschlussteile 30, 32 ist aus Figur 4 ersichtlich, derart, dass sie wenigstens im Bereich der Polwurzeln 20, 22 zur Gewichtsreduzierung Hohlräume 50 aufweisen. Die Befestigung der selbsttragenden Verschlussteile 30, 32 auf der Rotorwelle 28 erfolgt durch Aufpressen, wobei eine weitere Sicherung durch außen an den Grundkörpern 34, 36 anliegende Pressscheiben bzw. Pressteile 52 und 54 aus Stahl erreicht wird. Alternativ können die Verschlussteile 30, 32 auch durch Presssitz zwischen den Polfingern 24, 26 am Rotor 28 befestigt sein.

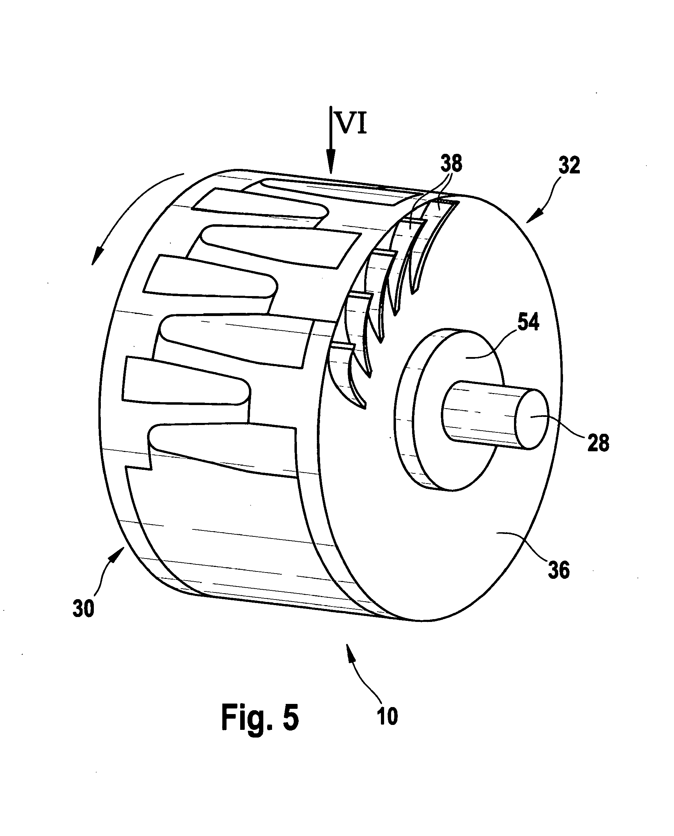

In den Figuren 5 bis 7 ist eine alternative Gestaltung der Verschlussteile 30, 32 dargestellt, wobei gleiche Teile mit gleichen Bezugszeichen wie in den Figuren 1 bis 4 versehen sind. Eine andere Gestalt besitzen hier die von den Grundkörpern 34, 36 vorspringenden Fortsätze 56 und 58, welche unsymmetrisch ausgebildet sind mit einem kürzeren Abschnitt 60, 62 jeweils im Bereich der Polwurzeln 20, 22 und einem schräg zur Rotationsachse, beziehungsweise zur Rotorwelle 28 verlaufenden längeren Abschnitt 64, 66, der zwischen benachbarte Polfingern 24, 26 eingreift. Hierbei sind die freien Enden der längeren Abschnitte 64 und 66 gestuft ausgebildet und stützen sich an entsprechend gestalteten Bereichen der gegenüberliegenden kürzeren Abschnitte 60, 62 ab, wodurch die Stabilität der Anordnung erhöht wird. Zusätzlich besitzen auch bei dieser Ausführung die Fortsätze 56 und 58 im Bereich der kürzeren Abschnitte 60 und 62 Auflagen 68 und 70 für die Spitzen der Polfinger 24 und 26.

In allen Figuren sind der Übersichtlichkeit wegen auch erfindungswesentliche Elemente nur zum Teil dargestellt. Beispielsweise sind nicht sämtliche Polfinger des Rotors zu erkennen und die beidseitig vorhandenen Lüfterschaufeln 38 sind nur an einer Stirnfläche des Rotors 10 dargestellt. Die Lüfterschaufeln können untereinander und an beiden Stirnflächen des Rotors 10 gleichartig ausgebildet sein, sie können aber in bekannter Weise entsprechend der Gestaltung der Schaufeln an Kühllüftern aus aerodynamischen Gründen auch unterschiedlich gestaltet und/oder angeordnet werden. Als Harz zum Verschließen verbliebener Spalte 44 und 46 sowie von Öffnungen 48 kann das gleiche Harz verwendet werden wie für die Imprägnierung der Wicklung 14, zum Beispiel das im Handel erhältliche Harz MF 8004 UV der Firma Beck Electrical Insulation GmbH, welches im Heißtauchverfahren verarbeitet und durch UV Strahlung ausgehärtet werden kann. In vorteilhafter Weise wird bei der Herstellung des Rotors zunächst die Wicklung 14 imprägniert und unmittelbar anschließend die Verschlussteile 30 und 32 aufgebracht, solange das Harz noch fließfähig ist, sodass die Imprägnierung in einem Arbeitsgang erfolgt.

Die erfindungsgemäße Anordnung erlaubt bei vollständiger Abdeckung und Glättung des Rotors 10 durch die Gestaltung der Oberflächen der Grundkörper 34 und 36 eine wirksame Abführung der Verlustwärme des Rotors, sodass die beim Stand der Technik für den Kühlluftdurchsatz beispielsweise im Bereich der Polwurzeln verbliebenen Öffnungen vollständig geschlossen und geglättet werden können, sodass auch in diesen Bereichen das durch Schwingungen von Luftsäulen verursachte Läufergeräusch vermieden wird. Die Abführung der Verlustwärme vom Rotor 10 ist in den Figuren 2 und 4 durch Wärmepfeile 72 deutlich gemacht. Diese zeigen einerseits den durch Wirbelstromverluste verursachten Wärmeübergang an den Klauenpolen und andererseits den durch die Verlustwärme in der Wicklung 14 bedingten Wärmeübergang jeweils auf die Verschlussteile 30 und 32 und von dort insbesondere über die Lüfterschaufeln 38 an die Umgebungsluft.

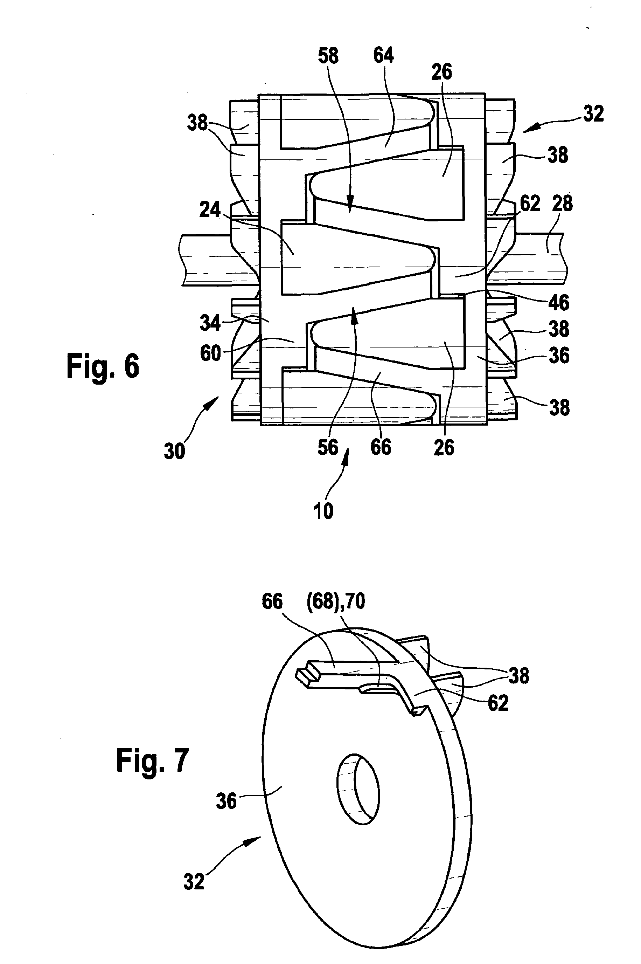

Das in den Figuren 5 bis 7 dargestellte Ausführungsbeispiel des Läuferverschlusses zeichnet sich dadurch aus, dass die Freiräume zwischen den Polfingern 24, 26 vollständig und spaltfrei geschlossen sind, wie dies insbesondere aus Figur 6 ersichtlich ist. Ein kleiner Spalt 46 an den Klauenpolwurzeln, welcher durch die Drehbewegung beim Einbringen der schräg verlaufenden längeren Abschnitte 64 und 66 zwischen die Polfinger 24 und 26 bedingt ist, wird nach der Montage durch Imprägnierharz verschlossen.

Es ist im Rahmen eines Verfahrens vorgesehen, den Magnetkern 12 mit den Polschuhen 16, 18 und den Klauenpolen 24, 26 auf die Rotorwelle 28 aufzupressen. Die Erregerwicklung 14 wird entweder davor auf den Magnetkern 12 gesetzt oder danach zwischen die Polschuhe 16, 18 gewickelt. Nach dem die Erregerwicklung 14 zwischen den Polschuhen 16, 18 angeordnet ist, kann ein Imprägniervorgang vorgesehen sein, wobei mittels Harz die Erregerwicklung 14 fixiert wird. Anschließend werden die selbsttragenden Verschlussteile 30, 32 jeweils von einer Seite auf die Rotorwelle 28 aufgesteckt und dabei entweder auf die Rotorwelle 28 oder zwischen die Polfinger 24, 26 gepresst und dort ggf. gehaltert. Eine axiale Position der Verschlussteile 30, 32 kann dabei durch eine Verstemmung (umgeformter Abschnitt) auf der Rotorwelle 28 gesichert sein. Anschlussdrähte der Erregerwicklung 14 können durch einen der Grundkörper 34 oder 36 zu einem Schleifringsystem hindurchgeführt sein. Nach der Montage kann ein gemeinsames Überdrehen (spanendes Abdrehen) der nach radial außen gerichteten Oberfläche des Rotors 10 und der Verschlussteile 30 und 32 vorgesehen sein.

## Patentansprüche

1. Rotor für eine elektrische Klauenpolmaschine, mit elektromagnetisch erregbaren Polschuhen mit Polfingern, welche sich abwechselnd und in Achsrichtung überlappend parallel zur Rotationsachse erstrecken, **dadurch gekennzeichnet, dass** geräuschdämpfende Mittel einen im Wesentlichen vollständigen Verschluss aus Verschlussteilen (30, 32) von Freiräumen zwischen den Polfingern (24,26) und an den Polwurzeln (20,22) des Rotors (10) bilden, wobei die Verschlussteile (30,32) zwei scheibenförmige Grundkörper (34,36) im Bereich der Polschuhe (16,18) des Rotors (10) aufweisen, welche mit Fortsätzen (40,56) in die Freiräume an den Polfingern (24,26) und an den Polwurzeln (20,22) hineinreichen.

2. Rotor nach Anspruch 1, **dadurch gekennzeichnet, dass** die Verschlussteile (30,32) mit den äußeren Oberflächen der Polfinger (24,26) und der Polwurzeln (20,22) im Wesentlichen bündig abschließen.

3. Rotor nach einem der vorhergehenden Ansprüche, **dadurch gekennzeichnet, dass** die Verschlussteile (30,32) aus diamagnetischem oder paramagnetischem Material mit hoher Wärmeleitfähigkeit aus A1 oder einer A1-Legierung bestehen.

4. Rotor nach einem der vorhergehenden Ansprüche, **dadurch gekennzeichnet, dass** die Verschlussteile (30,32) als selbsttragende Bauteile gestaltet sind.

5. Rotor nach einem der vorhergehenden Ansprüche, **dadurch gekennzeichnet, dass** die äußere Oberfläche wenigstens eines Grundkörpers (34,36) der Verschlussteile (30,32) als Kühlkörper gestaltet ist.

6. Rotor nach Anspruch 5, **dadurch gekennzeichnet, dass** die Kühlkörper an der äußeren Oberfläche wenigstens eines Grundkörpers (34,36) der Verschlussteile (30,32) in Form von Lüfterschaufeln (38) ausgebildet sind.

7. Rotor nach einem der vorhergehenden Ansprüche, **dadurch gekennzeichnet, dass** die Verschlussteile (30,32) im Wesentlichen spaltfrei an den Polschuhen (16,18) und/oder an den Polwurzeln (20,22) und/oder an den Polfingern (24,26) und/oder an der Wicklung (14) des Rotors (10) anliegen.

8. Rotor nach einem der vorhergehenden Ansprüche, **dadurch gekennzeichnet, dass** die Verschlussteile (30,32) wenigstens im Bereich der Polwurzeln (20,22) als Hohlkörper ausgebildet sind.

9. Rotor nach einem der vorhergehenden Ansprüche, **dadurch gekennzeichnet, dass** die Verschlussteile (30,32) durch Presssitz auf der Rotorwelle (28), vorzugsweise unter Verwendung zusätzlicher äußerer Pressteile (52), oder durch Presssitz zwischen den Polfingern 24, 26 am Rotor 28 befestigt sind.

10. Rotor nach einem der vorhergehenden Ansprüche, **dadurch gekennzeichnet, dass** die Verschlussteile (30,32) mit wärmeleitfähigem Harz imprägniert und verbliebene Spalte (44,46) und/oder Öffnungen (48) hierbei geschlossen werden.

11. Rotor nach einem der vorhergehenden Ansprüche, **dadurch gekennzeichnet, dass** die Fortsätze (40) der Verschlussteile (30,32) symmetrisch zu den Polfingern (24,26) ausgebildet sind (Figuren 1-4).

12. Rotor nach Anspruch 11, **dadurch gekennzeichnet, dass** die Fortsätze (40) der Verschlussteile (30,32) sich in axialer Richtung jeweils bis etwa zur Mitte der Rotormantelfläche erstrecken.

13. Rotor nach einem der Ansprüche 1-10, **dadurch gekennzeichnet, dass** die Fortsätze (56) der Verschlussteile (30,32) unsymmetrisch ausgebildet sind mit einem kürzeren Abschnitt (60,62) an der Polwurzeln (20,22) und einem schräg zur Rotationsachse verlaufenden längeren Abschnitt (64,66) zwischen benachbarten Polfingern (24,26); wobei sich vorzugsweise die längeren Abschnitte (64,66) jeweils am gegenüberliegenden kürzeren Abschnitt (60,62) abstützen (Figuren 5-7).

14. Rotor nach einem der vorhergehenden Ansprüche, **dadurch gekennzeichnet, dass** die Verschlussteile (30,32) Stützflächen (68) für die Spitzen der von der Gegenseite vorspringenden Polfinger (24,26) aufweisen.

15. Elektrische Klauenpolmaschine **gekennzeichnet durch** einen Rotor (10) nach einem der vorstehenden Ansprüche.

## Claims

1. Rotor for an electrical claw-pole machine, having electromagnetically excitable pole shoes with pole fingers which extend parallel to the rotation axis in an alternating manner and such that they overlap in the axial direction, **characterized in that** noise-damping means form a substantially complete closure comprising closure parts (30, 32) of free spaces between the pole fingers (24, 26) and at the pole roots (20, 22) of the rotor (10), wherein the closure parts (30, 32) have two disc-shaped main bodies (34, 36) in the region of the pole shoes (16, 18) of the rotor (10), which main bodies, by way of projections (40, 56), extend into the free spaces at the pole fingers (24, 26) and at the pole roots (20, 22).

2. Rotor according to Claim 1, **characterized in that** the closure parts (30, 32) terminate substantially flush with the outer surfaces of the pole fingers (24, 26) and of the pole roots (20, 22).

3. Rotor according to either of the preceding claims, **characterized in that** the closure parts (30, 32) are composed of a diamagnetic or paramagnetic material with a high degree of thermal conductivity, of aluminium or of an aluminium alloy.

4. Rotor according to one of the preceding claims, **characterized in that** the closure parts (30, 32) are configured as self-supporting components.

5. Rotor according to one of the preceding claims, **characterized in that** the outer surface of at least one main body (34, 36) of the closure parts (30, 32) is configured as a heat sink.

6. Rotor according to Claim 5, **characterized in that** the heat sinks on the outer surface of at least one main body (34, 36) of the closure parts (30, 32) are designed in the form of fan blades (38).

7. Rotor according to one of the preceding claims, **characterized in that** the closure parts (30, 32) bear against the pole shoes (16, 18) and/or against the pole roots (20, 22) and/or against the pole fingers (24, 26) and/or against the winding (14) of the rotor (10) substantially without gaps.

8. Rotor according to one of the preceding claims, **characterized in that** the closure parts (30, 32) are designed as hollow bodies at least in the region of the pole roots (20, 22).

9. Rotor according to one of the preceding claims, **characterized in that** the closure parts (30, 32) are fastened to the rotor (28) by a press-fit on the rotor shaft (28), preferably using additional outer pressing parts (52), or by a press-fit between the pole fingers (24, 26).

10. Rotor according to one of the preceding claims, **characterized in that** the closure parts (30, 32) are impregnated with thermally conductive resin, and remaining gaps (44, 46) and/or openings (48) are closed in this way.

11. Rotor according to one of the preceding claims, **characterized in that** the projections (40) of the closure parts (30, 32) are designed symmetrically to the pole fingers (24, 26) (Figures 1-4).

12. Rotor according to Claim 11, **characterized in that** the projections (40) of the closure parts (30, 32) extend in the axial direction in each case approximately as far as the centre of the rotor casing surface.

13. Rotor according to one of Claims 1-10, **characterized in that** the projections (56) of the closure parts (30, 32) are designed asymmetrically, with a relatively short section (60, 62) on the pole roots (20, 22) and a relatively long section (64, 66), which runs obliquely to the rotation axis, between adjacent pole fingers (24, 26); and wherein the relatively long sections (64, 66) are preferably supported in each case on opposing relatively short sections (60, 62) (Figures 5-7).

14. Rotor according to one of the preceding claims, **characterized in that** the closure parts (30, 32) have supporting surfaces (68) for the tips of the pole fingers (24, 26) which protrude from the opposite side.

15. Electrical claw-pole machine **characterized by** a rotor (10) according to one of the preceding claims.

## Revendications

1. Rotor pour machine électrique à griffes polaires présentant des sabots polaires aptes à être excités électromagnétiquement et dotés de doigts de pôle qui s'étendent en alternance et en superposition dans la direction axiale et parallèlement à l'axe de rotation, **caractérisé en ce que**
des moyens d'atténuation du bruit forment une fermeture essentiellement complète en pièces de fermeture (30, 32) entre les doigts de pôle (24, 26) et sur les racines (20, 22) des pôles du rotor (10),
**en ce qu'**au niveau des sabots polaires (16, 18) du rotor (10), les pièces de fermeture (30, 32) présentent sur les doigts de pôle (24, 26) et les racines de pôle (20, 22) deux corps de base (34, 36) en forme de disque qui s'enfoncent par des appendices (40, 56) dans les espaces libres.

2. Rotor selon la revendication 1, **caractérisé en ce que** les pièces de fermeture (30, 32) se raccordent essentiellement à chant avec les surfaces extérieures des doigts de pôle (24, 26) et des racines de pôle (20, 22).

3. Rotor selon l'une des revendications précédentes, **caractérisé en ce que** les pièces de fermeture (30, 32) sont constituées d'un matériau diamagnétique ou paramagnétique à haute conductivité thermique, en A1 ou alliage d'Al.

4. Rotor selon l'une des revendications précédentes, **caractérisé en ce que** les pièces de fermeture (30, 32) sont configurées comme composants autoportants.

5. Rotor selon l'une des revendications précédentes, **caractérisé en ce que** la surface extérieure d'au moins un corps de base (34, 36) des pièces de fermeture (30, 32) est configurée comme corps de refroidissement.

6. Rotor selon la revendication 5, **caractérisé en ce que** sur la surface extérieure d'au moins un corps de base (34, 36) des pièces de fermeture (30, 32), les corps de refroidissement sont configurés comme aubes (38) de ventilateur.

7. Rotor selon l'une des revendications précédentes, **caractérisé en ce que** les pièces de fermeture (30, 32) reposent essentiellement sans jeu sur les sabots polaires (16, 18), sur les racines de pôle (20, 22), sur les doigts de pôle (24, 26) et/ou sur l'enroulement (14) du rotor (10).

8. Rotor selon l'une des revendications précédentes, **caractérisé en ce qu'**au moins au niveau des racines de pôle (20, 22), les pièces de fermeture (30, 32) sont configurées comme corps creux.

9. Rotor selon l'une des revendications précédentes, **caractérisé en ce que** les pièces de fermeture (30, 32) sont fixées sur le rotor (28) entre les doigts de pôle (24, 26) par serrage sur l'arbre (28) du rotor, de préférence en recourant à des pièces extérieures supplémentaires de pressage (52), ou par pressage entre les doigts de pôle (24, 26).

10. Rotor selon l'une des revendications précédentes, **caractérisé en ce que** les pièces de fermeture (30, 32) sont imprimées d'une résine thermoconductrice et **en ce que** les interstices (44, 46) restants et/ou les ouvertures (48) sont ainsi fermées.

11. Rotor selon l'une des revendications précédentes, **caractérisé en ce que** les appendices (40) des pièces de fermeture (30, 32) sont configurés de manière symétrique par rapport aux doigts de pôle (24, 26) (figures 1 à 4).

12. Rotor selon la revendication 11, **caractérisé en ce que** les appendices (40) des pièces de fermeture (30, 32) s'étendent tous dans la direction axiale jusque sensiblement le milieu de la surface d'enveloppe du rotor.

13. Rotor selon l'une des revendications 1 à 10, **caractérisé en ce que** les appendices (56) des pièces de fermeture (30, 32) ont une configuration non symétrique, avec une partie courte (60, 62) sur les racines de pôle (20, 22) et une partie longue (64, 66) qui s'étend obliquement par rapport à l'axe de rotation entre des doigts de pôle (24, 26) voisins, les parties longues (64, 66) s'appuyant toutes de préférence sur la partie courte (60, 62) opposée (figures 5 à 7).

14. Rotor selon l'une des revendications précédentes, **caractérisé en ce que** les pièces de fermeture (30, 32) présentent des surfaces d'appui (68) pour les pointes des doigts de pôle (24, 26) qui débordent du côté opposé.

15. Machine électrique à pôles en griffe, **caractérisée par** un rotor (10) selon l'une des revendications précédentes.
